# EUROPEAN PATENT SPECIFICATION

(11) **EP 0 458 608 B1**
(45) Date of publication and mention of the grant of the patent: **31.07.1996**
(21) Application number: 91304613.2
(22) Date of filing: 21.05.1991
(51) Int. Cl.: G02B 6/24, G02B 6/26, G02B 6/30

(54) **Multi-part optical fibre connectors**
Mehrteiliger Glasfaserverbinder
Connecteur pour fibres optiques à plusieurs parties

(30) Priority: 22.05.1990 GB 9011424
(43) Date of publication of application: 27.11.1991
(60) Divisional application: 95202976.7
(73) Proprietor: BICC Public Limited Company, London W1X 5FH (GB)
(72) Inventor: Longhurst, Philip C., Bunbury, Cheshire (GB)
(74) Representative: Dlugosz, Anthony Charles

(56) References cited:
- EP-A- 0 216 211
- EP-A- 0 277 390
- US-A- 4 650 278
- PATENT ABSTRACTS OF JAPAN, vol. 10, no. 57 (P-434), 7 March 1986 & JP-A-60 200 210

## Description

This invention relates to multi-part optical fibre connectors for detachably optically inter-connecting end-to-end at least two flexible optical guides each comprising at least one optical fibre. Such multi-part optical fibre connectors essentially comprise two separately formed connector-parts, each of which is adapted to be permanently or detachably secured to one of the flexible optical guides to be optically interconnected, and may include at least one separately formed intermediate connector-part or adaptor for optically inter-connecting two separately formed connector parts. To facilitate detachable inter-connnection of two separately formed optical fibre connector-parts, each connector part of a multi-part optical fibre connector constitutes at one or each of two oppositely disposed ends of the connector-part a plug or a socket adapted to effect a detachable plug and socket connection with a socket or a plug at an end of another connector-part. Multi-part optical fibre connectors of this kind are widely used in optical transmission systems.

An optical fibre cable connector for use in a multi-part optical fibre connector assembly is disclosed in EP-A-277,390, which connector-part comprises a body in which at least one optical pathway extends between two oppositely disposed ends of the body, and at least one passive integrated optical chip comprising at least one waveguide and being located in the body intermediate of the oppositely disposed ends of the body, wherein said at least one waveguide constitutes at least partially the optical pathway or at least one of the optical pathways extending between said oppositely disposed ends of the body wherein at least one of said two oppositely disposed ends of the body constitutes a plug or a socket and the waveguide(s) of the passive integrated optical chip or at least one of the passive integrated optical chips is/are permanently optically inter-connected between end parts of the optical pathway or of at least one of the optical pathways of which it constitutes a part so that an optical signal is accurately transmittable along said optical pathway to said optical chip.

It is an object of the present invention to provide, for use in a multi-part optical fibre connector of the aforesaid kind, an improved optical fibre connector-part which is of such a construction that an optical transmission system in which a multi-part optical fibre connector is inter-connected can be readily reconfigured or modified.

The connector part according to the present invention is characterised in that the body is a moulded body of plastics material, and the passive integrated optical chip or at least one of the chips is encapsulated in the plastics material of the moulded body and that the part or parts of the or each optical pathway not constituted by the waveguide(s) of said passive integrated optical chip is or are at least one optical fibre attached to the integrated chip and encapsulated in the moulded plastics material.

In some circumstances, the integrated optical chip or at least one of the integrated optical chips of the improved optical fibre connector-part may be so encapsulated in the plastics material of or may be otherwise so disposed within the housing that one side face of the chip is positioned at an end of the housing constituting a plug or socket and the chip is permanently optically connected to a part of the optical conductor or of at least one of the optical conductors extending to the other end of the housing.

The or each integrated optical chip may be designed to effect any one of a plurality of fibre-optic functions included among which are:-
(i) a tree coupler constituting a cascaded series of Y-junctions;
(ii) a star coupler incorporating a mixing region intermediate of a plurality of input points and a plurality of output points;
(iii) a wavelength division multiplexer;
(iv) a full-duplex wavelength division multiplexer;
(v) an attenuating device;
(vi) an optical filter;
(vii) a phase modulator;
(viii) an access coupler, and
(ix) an optical Wheatstone bridge.

This list of functions which the or an integrated optical chip of the improved optical fibre connector-part can serve is by no means exhaustive.

The or each integrated optical chip of the improved optical fibre connector-part may be a suitable integrated optical chip obtained from any source.

Where the improved optical fibre connector-part is to constitute one end part of a multi-part optical fibre connector, preferably one of the two oppositely disposed ends of the housing of the improved optical fibre connector-part constitutes a plug or a socket and the other of the two oppositely disposed ends is adapted to be permanently or detachably secured to an end of at least one flexible optical guide comprising at least one optical fibre in such a way that the or each optical fibre of the guide is optically connected to the or an optical conductor of the improved optical fibre connector-part or that the or each optical fibre of the guide extends into the housing of the improved optical fibre connector-part and constitutes a part of the or an optical conductor of the connector-part. The end of the housing constituting a plug or a socket may also constitute at least one additional plug or socket for effecting a plug and socket connection with a socket or plug at an end of a further optical fibre connector-part.

The or each flexible optical guide to which one end of an improved optical fibre connector-end part can be permanently or detachably secured may be an optical cable comprising a single optical fibre or comprising a plurality of optical fibres or it may be an optical fibre ribbon comprising a plurality of optical fibres arranged side-by-side with their axes lying in a substantially common plane.

Where the improved optical fibre connector-part is to constitute an intermediate part of a multi-part optical fibre connector, for example an adaptor for inter-connecting by plug and socket connections two end parts of a multi-part optical fibre connector, each of two oppositely disposed ends of the housing of said intermediate improved optical fibre connector-part will constitute a plug or a socket. The housing of the intermediate improved optical fibre connector-part may constitute at least one additional plug or socket for effecting a plug and socket connection with a socket or plug at an end of a further optical fibre connector-part. The additional plug or socket or at least one of the additional plugs or sockets of the intermediate improved optical fibre connector-part may be disposed at one of the two oppositely disposed ends of the housing of the connector-part or at a position intermediate of said two oppositely disposed ends.

It will be appreciated that the number of additional plugs or sockets constituted by the housing of the improved optical fibre connector-part will be determined by the function of the or each integrated optical chip disposed within the housing of the connector-part.

The invention also includes an improved multi-part optical fibre connector for detachably inter-connecting end-to-end at least two flexible optical guides each comprising at least one optical fibre, at least one of the connector-parts of the multi-part optical fibre connector being an improved optical fibre connector-part substantially as hereinbefore described.

The invention further includes a kit of parts for assembling an improved multi-part optical fibre connector as hereinbefore described, which kit of parts comprises at least two optical fibre connector-end parts each comprising a housing which at one of two oppositely disposed ends of the housing constitutes a plug or a socket and which at the other of said two oppositely disposed ends is adapted to be permanently or detachably secured to an end of at least one flexible optical guide comprising at least one optical fibre and at least one optical conductor disposed within and extending between said two oppositely disposed ends of the housing; and at least two adaptors for optically inter-connecting two end parts, each adaptor comprising a housing in which at least one optical conductor is disposed between two oppositely disposed ends of the housing, each constituting a plug or a socket, and in which at least one integrated optical chip is disposed and constitutes at least a part of said optical conductor or of at least one of said optical conductors, the integrated optical chip of each adaptor differing from the integrated optical chip of the other adaptor or of each of the other adaptors.

At least one of the optical fibre connector-end parts of the kit of parts may have at least one integrated optical chip disposed in its housing and constituting at least a part of the optical conductor or of one of the optical conductors extending between oppositely disposed ends of the housing.

The improved optical fibre connector-part and the improved optical fibre connector of the present invention have the important advantage that an optical transmission system of any desired configuration can be readily assembled using one or more than one improved optical fibre connector-part incorporating at least one integrated optical chip designed to effect a designed function and that an existing optical transmission system can be readily reconfigured or modified by replacing one or more than one improved optical fibre connector-part inter-connected in the system with one or more than one improved optical fibre connector-part of which the or each integrated optical chip is designed to effect a function differing from the function of the chip or chips of the connector-part being replaced.

The invention is further illustrated by a description, by way of example, of two preferred forms of multi-part optical fibre connector with reference to the accompanying diagrammatic drawings, in which:-
Figure 1 is an exploded diagrammatic representation of a preferred two-part optical fibre connector, and
Figure 2 is an exploded representation of one preferred form of three-part optical fibre connector.

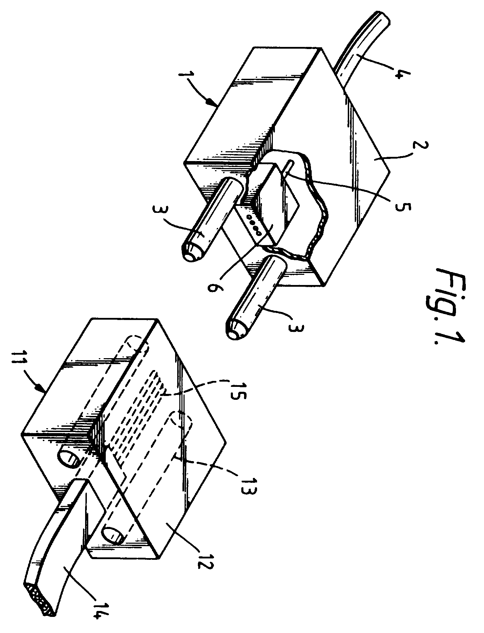

Referring to Figure 1, the preferred two-part optical fibre connector comprises an optical fibre connector-part 1 having protruding from one of two oppositely disposed ends of its moulded plastics body 2 a pair of transversely spaced parallel rigid pins 3 adapted to effect plug and socket connections in a pair of transversely spaced parallel holes 13 in one of two oppositely disposed ends of the moulded plastics body 12 of an optical fibre connector-part 11. Encapsulated in one of the two oppositely disposed ends of the moulded body 12 of the optical fibre connector-part 11 is an end of an optical fibre ribbon cable 14 from which protrude four optical fibres 15 which are centrally disposed between the transversely spaced holes 13 and which extend to the other of the oppositely disposed ends of the body with their axes lying in the same plane as the axes of the holes. Encapsulated in one of the two oppositely disposed ends of the moulded body 2 of the optical fibre connector-part 1 is an end of an optical cable 4 having a single optical fibre 5 and extending between the encapsulated end of the optical cable and the other of the oppositely disposed ends of the body is an optical conductor constituted in part by the optical fibre of the optical cable and in part by an integrated optical chip 6 which is optically connected to the optical fibre and which is so encapsulated in the plastics material of the body 2 that one side face of the chip is exposed and centrally disposed between the transversely spaced rigid pins 3. The integrated optical chip 6 functions as a tree coupler constituting a cascaded series of Y-junctions and in the exposed side face of the chip are exposed the end faces of four optical guides whose axes lie in the same plane as the axes of the rigid pins and which are so transversely spaced apart that, when a plug and socket connection is made between the optical fibre connector-parts 1 and 11, the end faces of the optical guides and the end faces of the optical fibres 15 abut to effect optical connections therebetween.

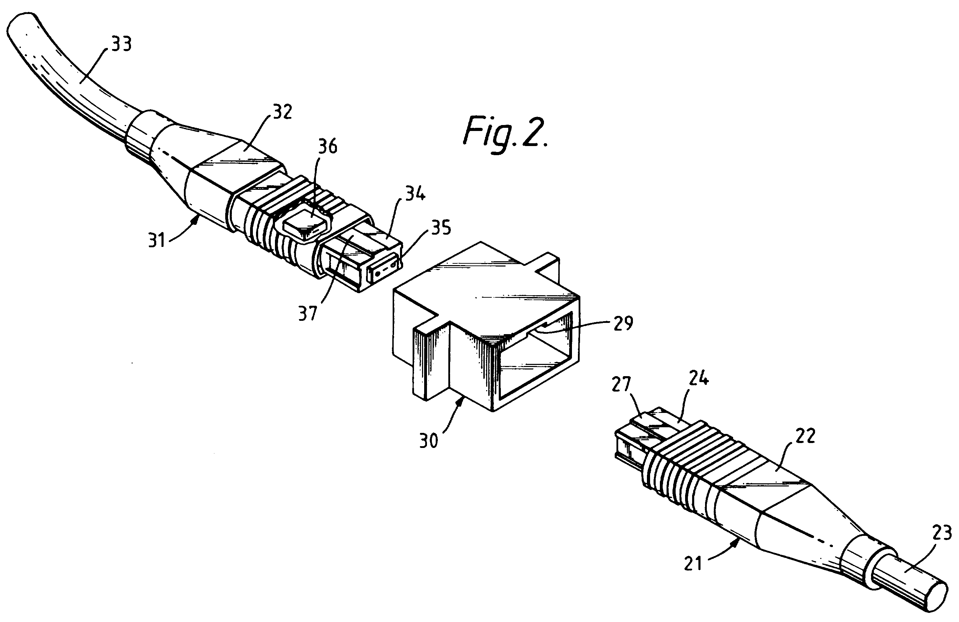

The first preferred form of three-part optical fibre connector shown in Figure 2 comprises an optical fibre connector-part 21, an optical fibre connector-part 31 and, adapted to optically interconnect the two optical fibre connector-end parts, a mating adaptor 30. The optical fibre connector-end part 21 comprises a moulded plastics body 22 in one of two oppositely disposed ends of which is encapsulated an end of a multi-fibre optical cable 23, the other end 24 of the moulded body constituting a plug. Encapsulated in the plug 24 of the optical fibre connector-end part 21 is a moulded array connector in an exposed end face of which are exposed the end faces of a plurality of optical fibres optically connected to the optical fibres of the optical cable 23. The axes of the exposed end faces of the optical fibres of the moulded array connector lie in a substantially common plane. The optical fibre connector-end part 31 comprises a moulded plastics body 32 having encapsulated in one of two oppositely disposed ends an end of an optical cable 33, the other of the oppositely disposed ends of the body constituting a plug 34. A moulded array connector 35 is so encapsulated in the plug 34 of the optical fibre connector-end part 31 that one end face of the moulded array connector is exposed. Extending between the optical fibres of the optical cable 33 and the encapsulated moulded array connector 35 are a plurality of optical conductors constituted in part by optical fibres and in part by an integrated optical chip 36 encapsulated in the moulded body 32 intermediate of its ends and permanently optically connected between the optical fibres constituting the optical conductors. The integrated optical chip 36 functions as a star coupler incorporating a mixing region intermediate of a plurality of input points and a plurality of output points. The end faces of the optical fibres extending from the integrated optical chip 36 are exposed at the end face of the moulded array connector 35 with their axes lying in a substantially common plane. The plugs 24 and 34 at the ends of the optical fibre connector-end parts 21 and 31 are adapted to effect plug and socket connections in sockets at the opposite ends of the mating adaptor 30. To this end, each of the plugs 24, 34 has a rib 27, 37 adapted to engage in a groove 29 in the mating adaptor 30, the arrangement being such that when the plugs 24, 34 are fully engaged in the mating adaptor the exposed end faces of the moulded array connectors 25, 35 abut with the exposed end faces of the optical fibres in axial alignment.

## Claims

1. An optical fibre cable connector-part (1, 31, ) for use in a multi-part optical fibre connector assembly which connector part comprises a body (2, 32) in which at least one optical pathway (5) extends between two oppositely disposed ends of the body, and at least one passive integrated optical chip (6, 36, ) comprising at least one waveguide and being located in the body intermediate of the oppositely disposed ends of the body, wherein said at least one waveguide constitutes at least partially the optical pathway or at least one of the optical pathways extending between said oppositely disposed ends of the body wherein at least one of said two oppositely disposed ends of the body constitutes a plug or a socket(3,34), and the waveguide(s) of the passive integrated optical chip (6,36) or at least one of the passive integrated optical chips is/are permanently optically inter-connected between end parts of the optical pathway or of at least one of the optical pathways of which it constitutes a part so that an optical signal is accurately transmittable along said optical pathway to said optical chip, characterised in that the body (2, 32) is a moulded body of plastics material and the passive integrated optical chip (36,56) or at least one of the chips is encapsulated in the plastics material of the moulded body and that the part or parts of the or each optical pathway not constituted by the waveguide(s) of said passive integrated optical chip is or are at least one optical fibre attached to the integrated chip and encapsulated in the moulded plastics material.

2. An optical fibre connector-part as claimed in Claim 1, wherein the passive integrated optical chip (6) or at least one of the passive integrated optical chips (6) is so encapsulated in the plastics material of the moulded body (2) that one side face of the chip is positioned at an end of the body constituting a plug or socket and is permanently optically connected to a part of the optical conductor (5) or of at least one of the optical conductors extending to the other end of the body.

3. An optical fibre connector-part as claimed in any one of the preceding Claims which is to constitute one end part of a multi-part optical fibre connector, wherein one of the two oppositely disposed ends of the moulded body constitutes a plug or a socket (3, 34) and the other of the two oppositely disposed ends is permanently or detachably secured to an end of at least one flexible optical guide (4, 33) comprising at least one optical fibre in such a way that the or each optical fibre of the guide is optically connected to the or an optical conductor of the optical fibre connector-part or that the or each optical fibre of the guide extends into the moulded body and constitutes a part of the or an optical conductor of the connector-part.

4. An optical fibre connector-part as claimed in any one of Claims 1 to 3 which is to constitute the end part of a multi-part optical fibre connector, wherein one of the two oppositely disposed ends of the moulded body constitutes a plug or a socket (3, 34) and the other of the two oppositely disposed ends is permanently or detachably secured to an end of at least one flexible optical cable (4, 33) comprising a single optical fibre or comprising a plurality of optical fibres, or to an end of an optical fibre ribbon comprising a plurality of optical fibres arranged side-by-side with their axes lying in a substantially common plane, in such a way that the or each optical fibre is optically connected to the or an optical conductor of the optical fibre connector-part or that the or each optical fibre extends into the moulded body and constitutes a part of the or an optical conductor of the connector-part.

5. An optical fibre connector-part as claimed in any one of Claims 1 to 3 which is to constitute an intermediate part of a multi-part optical fibre connector, wherein each of two oppositely disposed ends of the moulded body of the optical fibre connector-part constitutes a plug or a socket.

6. An optical fibre connector-part as claimed in Claim 5, wherein the moulded body of the intermediate optical fibre connector-part constitutes at least one additional plug or socket for effecting a plug and socket connection with a socket or plug at an end of a further optical fibre connector-part.

7. An optical fibre connector-part as claimed in Claim 6, wherein the additional plug or socket or at least one of the additional plugs or sockets of the intermediate optical fibre connector-part is disposed at one of the two oppositely disposed ends of the moulded body or at a position intermediate of said two oppositely disposed ends.

8. A multi-part optical fibre connector assembly for detachably inter-connecting end-to-end at least two flexible optical guides each comprising at least one optical fibre, wherein at least one of the connector-parts of the multi-part optical fibre connector is an optical fibre connector-part as claimed in any one of the preceding Claims.

## Patentansprüche

1. Glasfaserkabelverbinderteil (1, 31) zur Verwendung in einer mehrteiligen Glasfaserverbinderanordnung, wobei das Verbinderteil aufweist: einen Körper (2, 32), in dem sich mindestens ein optischer Weg (5) zwischen zwei einander gegenüberliegenden Enden des Körpers erstreckt, und mindestens einen passiven integrierten optischen Chip (6, 36), der mindestens einen Wellenleiter aufweist und in dem Körper zwischen den einander gegenüberliegenden Enden des Körpers angeordnet ist, wobei der mindestens eine Wellenleiter mindestens teilweise den optischen Weg oder mindestens einen der optischen Wege bildet, der sich zwischen den einander gegenüberliegenden Enden des Körpers erstreckt, wobei mindestens einer der beiden einander gegenüberliegenden Enden des Körpers einen Stecker oder eine Buchse (3, 34) bildet und der bzw. die Wellenleiter des passiven integrierten optischen Chips (6, 36) oder mindestens eines der passiven integrierten optischen Chips eine dauerhafte optische Zwischenverbindung zwischen Endteilen des optischen Weges oder mindestens eines der optischen Wege ist bzw. sind, von dem er einen Teil bildet, so daß ein optisches Signal über den optischen Weg an den optischen Chip genau übertragbar ist, dadurch gekennzeichnet, daß der Körper (2, 32) ein geformter Körper aus Kunststoffmaterial ist und der passive integrierte optische Chip (36, 56) oder mindestens einer der Chips in dem Kunststoffmaterial des geformten Körpers eingekapselt ist, und daß der Teil oder die Teile des oder jedes optischen Weges, der bzw. die nicht durch den bzw. die Wellenleiter des passiven integrierten optischen Chips gebildet wird bzw. werden, mindestens eine optische Faser ist oder sind, die an dem integrierten Chip befestigt ist und in dem geformten Kunststoffmaterial eingekapselt ist.

2. Glasfaserverbinderteil nach Anspruch 1, wobei der passive integrierte optische Chip (6) oder mindestens einer der passiven integrierten optischen Chips (6) so in dem Kunststoffmaterial des geformten Körpers (2) eingekapselt ist, daß eine Seitenfläche des Chips an einem Ende des Körpers positioniert ist, das einen Stecker oder eine Buchse bildet und permanent mit einem Teil des optischen Leiters (5) oder mindestens eines der optischen Leiter optisch verbunden ist, der sich bis zum anderen Ende des Körpers erstreckt.

3. Glasfaserverbinderteil nach einem der vorangegangenen Ansprüche, das ein Endteil eines mehrteiligen Glasfaserverbinders bilden soll, wobei eines der beiden einander gegenüberliegenden Enden des geformten Körpers einen Stecker oder eine Buchse (3, 34) bildet und das andere der beiden einander gegenüberliegenden Enden dauerhaft oder lösbar an einem Ende mindestens eines flexiblen Lichtleiters (4, 33) mit mindestens einer optischen Faser fest angeordnet ist, so daß der oder jede optische Faser des Lichtleiters mit der oder einem optischen Leiter des Glasfaserverbinderteils optisch verbunden ist oder daß die oder jede optische Faser des Lichtleiters sich in den geformten Körper erstreckt und einen Teil des oder eines optischen Leiters des Verbinderteils bildet.

4. Glasfaserverbinderteil nach einem der Ansprüche 1 bis 3, das das Endteil eines mehrteiligen Glasfaserverbinders bilden soll, wobei eines der beiden einander gegenüberliegenden Enden des geformten Körpers einen Stecker oder eine Buchse (3, 34) bildet und das andere der beiden einander gegenüberliegenden Enden dauerhaft oder lösbar fest angeordnet ist an einem Ende mindestens eines flexiblen optischen Kabel (4, 33) mit einer einzelnen optischen Faser oder mit mehreren optischen Fasern oder an einem Ende eines optischen Faserbandes mit mehreren optischen Fasern, die nebeneinander angeordnet sind, wobei ihre Achsen auf einer im wesentlichen gleichen Ebene liegen, so daß die oder jede optische Faser mit dem oder einem optischen Leiter des Glasfaserverbinderteils optisch verbunden ist oder daß sich der oder jede optische Faser in den geformten Körper erstreckt und einen Teil des oder eines optischen Leiters des Verbinderteils bildet.

5. Glasfaserverbinderteil nach einem der Ansprüche 1 bis 3, das ein Mittelteil eines mehrteiligen Glasfaserverbinders bilden soll, wobei jedes der beiden einander gegenüberliegenden Enden des geformten Körpers des Glasfaserverbinderteils einen Stecker oder eine Buchse bildet.

6. Glasfaserverbinderteil nach Anspruch 5, wobei der geformte Körper des Glasfaserverbindermittelteils mindestens einen zusätzlichen Stecker oder eine zusätzliche Buchse zum Ausführen einer Steckverbindung mit einer Buchse oder einem Stecker an einem Ende eines weiteren Glasfaserverbinderteils bildet.

7. Glasfaserverbinderteil nach Anspruch 6, wobei der zusätzliche Stecker oder die zusätzliche Buchse oder mindestens einer bzw. eine der zusätzlichen Stecker oder Buchsen des Glasfaserverbindermittelteils an einem der beiden einander gegenüberliegenden Enden des geformten Körpers oder an einer Stelle zwischen den beiden einander gegenüberliegenden Enden angeordnet ist.

8. Mehrteilige Glasfaserverbinderanordnung zum lösbaren Verbinden der Enden von mindestens zwei flexiblen Lichtleitern, die jeweils mindestens eine optische Faser aufweisen, wobei mindestens eines der Verbinderteile des mehrteiligen Glasfaserverbinders ein Glasfaserverbinderteil nach einem der vorangegangenen Ansprüche ist.

## Revendications

1. Pièce de connecteur (1, 31) pour câbles de fibres optiques, à utiliser dans un ensemble multicomposant de connexion de fibres optiques, laquelle pièce de connecteur comprend un corps (2, 32) dans lequel s'étend au moins un trajet optique (5) entre deux extrémités opposées du corps, et au moins une puce optique passive (6, 36), intégrée, qui comprend au moins un guide d'onde et qui est située dans le corps entre les extrémités opposées du corps, sachant que ledit guide d'onde au nombre d'au moins un constitue au moins partiellement le trajet optique ou l'un au moins des trajets optiques s'étendant entre lesdites extrémités opposées du corps, sachant que l'une au moins desdites deux extrémités opposées du corps constitue une fiche ou une douille (3, 4) et que le ou les guide(s) d'onde de la puce optique passive intégrée (6, 36) ou de l'une au moins des puces optiques passives intégrées est/sont interconnecté(s) en permanence du point de vue optique entre des parties d'extrémité dudit trajet optique ou de l'un au moins des trajets optiques dont il(s) fait (font) partie intégrante, de sorte qu'un signal optique peut être transmis avec précision le long dudit trajet optique jusqu'à ladite puce optique,
caractérisée en ce que le corps (2, 32) est un corps en matière plastique moulée et la puce optique passive intégrée (6, 36) ou l'une au moins desdites puces est encapsulée dans la matière plastique du corps moulé et la ou les partie(s) du trajet optique ou de chacun d'eux qui ne sont pas/n'est pas constituée(s) par le ou les guide(s) d'onde de ladite puce optique passive intégrée est/sont au moins une fibre optique fixée à la puce intégrée et encapsulée dans la matière plastique moulée.

2. Pièce de connecteur pour fibres optiques selon la revendication 1, dans laquelle la puce optique passive intégrée (6) ou l'une au moins desdites puces optiques passives intégrées (6) est encapsulée dans la matière plastique du corps moulé (2) de telle sorte qu'une face latérale de ladite puce soit placée en une extrémité dudit corps qui constitue une fiche ou une douille et soit connectée en permanence du point de vue optique à une partie du conducteur optique (5) ou de l'un au moins des conducteurs optiques s'étendant jusqu'à l'autre extrémité dudit corps.

3. Pièce de connecteur pour fibres optiques selon l'une quelconque des précédentes revendications, destinée à constituer une partie terminale d'un connecteur multicomposant pour fibres optiques, dans laquelle l'une des deux extrémités opposées du corps moulé constitue une fiche ou une douille (3, 34) et l'autre des deux extrémités opposées est fixée de façon permanente ou amovible à une extrémité d'au moins un guide optique souple (4, 33) contenant au moins une fibre optique, de telle sorte que la fibre optique ou chaque fibre optique du guide est couplée du point de vue optique au conducteur optique ou à un conducteur optique de la pièce de connecteur pour fibres optiques ou que la fibre optique ou chaque fibre optique du guide s'étend dans le corps moulé et constitue une partie du ou d'un conducteur optique de la pièce de connecteur.

4. Pièce de connecteur pour fibres optiques selon l'une quelconque des revendications 1 à 3, destinée à constituer une partie terminale d'un connecteur multicomposant pour fibres optiques, dans laquelle l'une des deux extrémités opposées du corps moulé constitue une fiche ou une douille (3, 34) et l'autre des deux extrémités opposées est fixée de façon permanente ou amovible à une extrémité d'au moins un câble optique souple (4, 33) contenant une seule fibre optique ou contenant une pluralité de fibres optiques, ou bien à une extrémité d'un ruban de fibres optiques contenant une pluralité de fibres optiques disposées côte-à-côte avec leurs axes placés dans un plan sensiblement commun, de telle sorte que la fibre optique ou chaque fibre optique est couplée du point de vue optique au conducteur optique ou à un conducteur optique de la pièce de connecteur pour fibres optiques ou que la fibre optique ou chaque fibre optique s'étend dans le corps moulé et constitue une partie du ou d'un conducteur optique de la pièce de connecteur.

5. Pièce de connecteur pour fibres optiques selon l'une quelconque des revendications 1 à 3, destinée à constituer une partie intermédiaire d'un connecteur multicomposant pour fibres optiques, dans laquelle chacune des deux extrémités opposées dudit corps moulé de la pièce de connecteur pour fibres optiques constitue une fiche ou une douille.

6. Pièce de connecteur pour fibres optiques selon la revendication 5, dans laquelle le corps moulé de la pièce intermédiaire d'un connecteur pour fibres optiques constitue au moins une douille ou une fiche supplémentaire permettant de réaliser une connexion par douille et fiche avec une fiche ou une douille se trouvant en une extrémité d'une autre pièce de connecteur pour fibres optiques.

7. Pièce de connecteur pour fibres optiques selon la revendication 6, dans laquelle la douille ou la fiche supplémentaire ou l'une au moins des douilles ou fiches supplémentaires de la pièce intermédiaire de connecteur pour fibres optiques est placée en l'une des deux extrémités opposées du corps moulé ou bien en une position intermédiaire entre lesdites deux extrémités opposées.

8. Connecteur multicomposant pour fibres optiques destiné à interconnecter bout-à-bout et de façon amovible au moins deux guides optiques souples contenant chacun au moins une fibre optique, dans lequel l'une au moins des pièces de connecteur du connecteur multicomposant pour fibres optiques est une pièce de connecteur pour fibres optiques telle que revendiquée dans l'une quelconque des précédentes revendications.
